# EUROPEAN PATENT APPLICATION

(11) **EP 1 700 577 A1**
(43) Date of publication of application: **13.09.2006**
(21) Application number: 05005434.5
(22) Date of filing: 12.03.2005
(51) Int. Cl.: A61C 13/003, A61C 5/08

(54) **Detachable dental prothesis with lap-joint section horizontally extended from its top edge**

(71) Applicant: Wu, Wen-Yuen, Zuoying District Kaohsiung City 813 (TW)
(72) Inventor: Wu, Wen-Yuen, Zuoying District Kaohsiung City 813 (TW)
(74) Representative: Helms, Joachim

(57) **Abstract**

A detachable dental prostheses (15) comprising an inner crown (20) used to permanently fix on an abutment tooth (10) or a dental implant (10'), and a dental prostheses (40) with an outer crown (30) constituted a male-to-female matching structure relative to that of inner crown (20) for securely fitted on or freely detached from the inner crown (20) by combining or separating the male-to-female matching structure established on between the outer crown (30) and the inner crown (20), the dental prostheses (40) particularly has lap-joint section (44) horizontally extended from its top edge which is used to attach on occlusion surface of a neighboring tooth adjoining to the abutment tooth (10) or the dental implant (10'), by this way has the advantages including without subjecting any healthy tooth (N) to grinding and mending as an abutment tooth (10), burden of chewing pressure loaded on the detachable dental prostheses (40) obviously alleviated to prolong service life span, and no gap formed between the detachable dental prostheses (40) and neighboring tooth.

## Description

### FIELD OF THE PRESENT INVENTION

The invention relates to a detachable dental prostheses, particularly a kind of detachable dental prostheses with lap-joint section horizontally extended from its top edge to attach on occlusion surface of a neighboring tooth near to the detachable dental prostheses when used without subjecting neighboring healthy natural teeth to being ground and mended as an abutment tooth.

### DESCRIPTION OF PRIOR ART

According to general practice of dentistry, a decayed or diseased tooth is treated in such a way that the enamel of the decayed or diseased tooth is properly ground and mended as an abutment for permanently fitted with a dental prostheses to having the decayed or diseased tooth to be restored to its original condition.

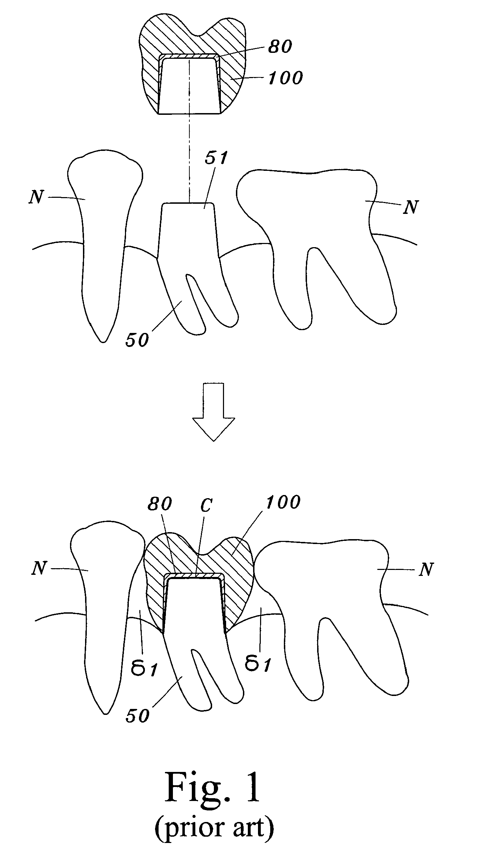

As illustrated in Fig. 1, a fixed dental prostheses 100 of the prior art is mounted on a metal crown 80 which is shaped to fit securely over a mended abutment 51 preformed on a decayed or diseased tooth 50 for curing the tooth 50, and the fitting of the metal crown 80 over the mended abutment 51 is attained in conjunction with a cement C to constitute a permanently fixed and not detachable combination. So that the mended abutment 51 of the decayed or diseased tooth 50 is thus restored to its original condition by using the fixed dental prostheses 100.

However, the fixed dental prostheses 100 is located between two healthy teeth N in such a manner that a gap δ1, formed between the fixed dental prostheses 100 and each of the two healthy teeth N as shown in Fig. 1, is apt to deposit food particles which can not be easily removed by means of ordinary tooth hygiene due to the fixed dental prostheses 100 not detachable.

But, it shall be a serious result to cause normally natural tooth N being pulled out in the future if food particles are always existed in the tooth gaps δ1 to give rise to become bacterial contamination on tooth gum or gingiva.

In addition, the fixed dental prostheses 100 is also defective in not strong enough to withstand pressure of the act of chewing.

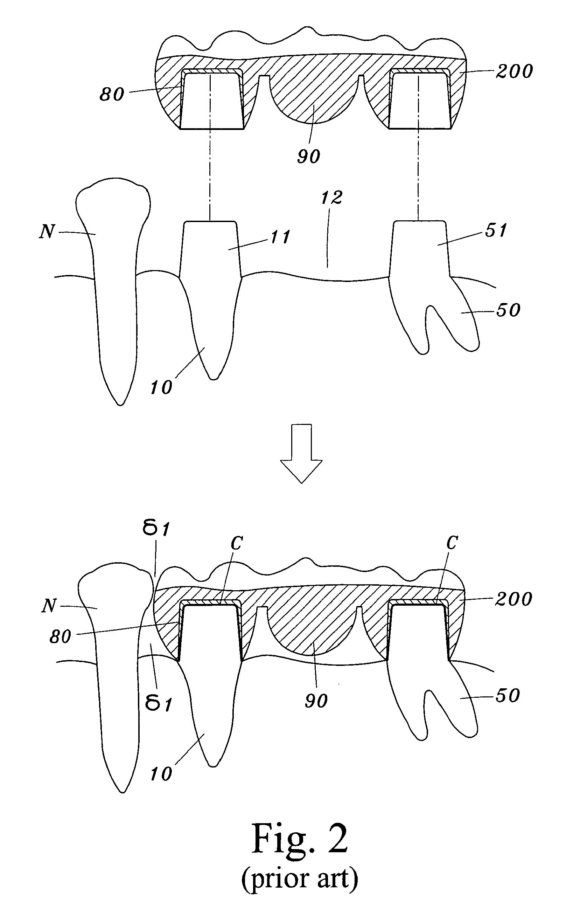

As illustrated in Fig. 2, another prior used stationary bridge-type dental prostheses 200 having several separated metal crowns 80 and a fill-up block 90 is particularly applied in a decayed or diseased tooth 50 under the condition of having an adjoining cavity 12 already leaved behind on tooth gum due to a tooth adjoining to the decayed or diseased tooth 50 being completely extracted.

For curing the decayed or diseased tooth 50 and further filling up the adjoining cavity 12 mentioned above, not only a mended abutment 51 should be established on the decayed or diseased tooth 50 for offering a relative metal crown 80 of stationary bridge-type dental prostheses 200 to be securely fitted thereon, but also a healthy natural tooth N near to the cavity 12 should be become to serve as an abutment tooth 10 by further established another mended abutment 11 thereon for offering other relative metal crown 80 of stationary bridge-type dental prostheses 200 being securely fitted on it too.

And, the fitting of separated metal crowns 80 over the mended abutment 11 and 51 are respectively attained in conjunction with a cement C to constitute a permanently fixed and not detachable combination. Therefore, the mended abutment 51 of the decayed or diseased tooth 50 is thus restored to its original condition and the cavity 12 is further filled up by using the stationary bridge-type dental prostheses 200 mentioned.

However, it is readily apparent that the prior used stationary bridge-type dental prostheses 200 is necessarily formed at the expense of a healthy natural tooth N which should be used to serve as an abutment tooth 10. Due to the bridge-type dental prostheses 200 being not detachable, the above-mentioned problem of food particles being always existed in the tooth gaps δ1 formed between the bridge-type dental prostheses 200 and a healthy natural tooth N is still unsolved.

Moreover, due to a tooth having been extracted already, the stationary bridge-type dental prostheses 200 necessarily only uses both the decayed or diseased tooth 50 already mended and the abutment tooth 10 to support chewing pressure originally exerted from three normally healthy teeth. This condition will cause the decayed or diseased tooth 50 and the abutment tooth 10 work overload or excessively bear the chewing pressure due to stationary bridge-type dental prostheses 200 being too long not detached for taking a rest, and it shall be a serious result to cause a healthy natural tooth N having served as the abutment tooth 10 being pulled out in the future if the gingival (including the tooth meat, tooth-borne base or tooth ligaments) around the abutment tooth 10 happened to be inflammation or disease due to being overloaded or overtired.

### SUMMARY OF THE PRESENT INVENTION

One objective of the present invention is to provide a detachable dental prostheses which is detachable for ordinary tooth care and comprises an inner crown permanently fixed onto an abutment tooth and a dental prostheses with an outer crown being able to be securely fitted on or freely detached from the inner crown by constituting a male-to-female matching structure between the inner crown and the outer crown.

Due to the detachable dental prostheses of this present invention being detachable, in spite of having gaps formed between the detachable dental prostheses and certain neighboring tooth (including natural tooth, abutment tooth or dental implant), the food particles deposited in the gaps can be easily removed by detaching the dental prostheses with outer crown from the inner crown fixed onto an abutment tooth.

Accordingly, the detachable dental prostheses of this present invention has functions including to prevent the gingival (including the tooth meat, tooth-borne base or tooth ligaments) from being resulted in bacterial contamination and further exempt the healthy natural tooth from being pulled out due to a serious result of bacterial contamination, and to protect the abutment tooth from working overload over a long period of time and prolong its service life due to properly taking a rest after the dental prostheses with outer crown being detached.

The primary objective of the present invention is to provide a detachable dental prostheses further having lap-joint section horizontally extended from its top edge capably being used to attach on occlusion surface of neighboring tooth (including natural tooth, abutment tooth or dental implant) particularly without subjecting the neighboring healthy natural teeth to being ground and mended as abutment tooth or without subjecting the neighboring abutment tooth or dental implant to being reformed.

In another words, all healthy teeth shall be undamaged and remained intact in spite of the mounting of the detachable dental prostheses of the present invention.

In addition, the lap-joint section of detachable dental prostheses of the present invention shall serve as a means to distribute the chewing pressure to neighboring natural teeth adjoining the detachable dental prostheses and to alleviate the burden loaded on the detachable dental prostheses. As a result, the longevity of the detachable dental prostheses of the present invention is then effectively prolonged.

Moreover, the lap-joint section of detachable dental prostheses of the present invention shall also serve as a means to eliminate a gap that is formed between the top edge of detachable dental prostheses of the present invention and the top edge of neighboring tooth (including natural tooth, abutment tooth or dental implant) adjoining the detachable dental prostheses. The elimination of the gap has a soothing effect on chewing.

The features and the advantages of the present invention will be more readily understood upon a thoughtful deliberation of the following detailed description of the preferred embodiments of the present invention with reference to the accompanying drawings.

### BRIEF DESCRIPTION OF THE DRAWING FIGURES

Fig. 1 is a sectional schematic drawing of a conventional fixed dental prostheses mounted fixedly on a mended tooth.
Fig. 2 is a sectional schematic drawing of another prior used stationary bridge-type dental prostheses mounted fixedly on a mended tooth and a abutment tooth under the condition of a tooth adjoining to the mended tooth being completely extracted.
Fig. 3 is a sectional schematic drawing of a detachable dental prostheses of this present invention at least comprising an inner crown and a dental prostheses with an outer crown particularly being constituted a male-to-female matching structure relative to that of inner crown with freely detachable function and applied in two mended abutment teeth.
Fig. 4 is a sectional schematic drawing of another detachable bridge-type dental prostheses of this present invention with freely detachable function easily mounted fixedly on a mended tooth, a dental implant and a abutment tooth under the condition of a tooth adjoining to the dental implant being completely extracted.
Fig. 5 is a sectional schematic drawing of a detachable dental prostheses of this present invention to illustrate the detachable dental prostheses further having lap-joint section horizontally extended from its top edge.
Fig. 6 is a sectional schematic drawing to illustrate when the detachable dental prostheses shown in Fig. 5 applied to a mended abutment tooth all healthy teeth shall be undamaged by its lap-joint section being attached on occlusion surface of neighboring tooth and having an intimate contact line G served to avert a gap formed.
Fig. 7 is a sectional schematic drawing of another detachable bridge-type dental prostheses of this present invention to illustrate the detachable bridge-type dental prostheses further having lap-joint section horizontally extended from its top edge.
Fig. 8 and Fig. 9 are sectional schematic drawings to illustrate detachable bridge-type dental prostheses shown in Fig. 7 respectively applied to a mended abutment tooth or a dental implant under the condition of a tooth adjoining to the abutment tooth being completely extracted without healthy teeth being served as an abutment tooth.
Fig. 10 shows a top view of a detachable dental prostheses of this present invention having lateral lap-joint section extended from its top edge and attached on a tooth wall K of a neighboring tooth without healthy teeth being served as an abutment tooth.
Fig. 11 shows an enlarged sectional schematic drawing taken in the direction indicated by a line A-A as shown in Fig. 10.

### DETAILED DESCRITION OF THE PREFERRED EMBODIMENTS

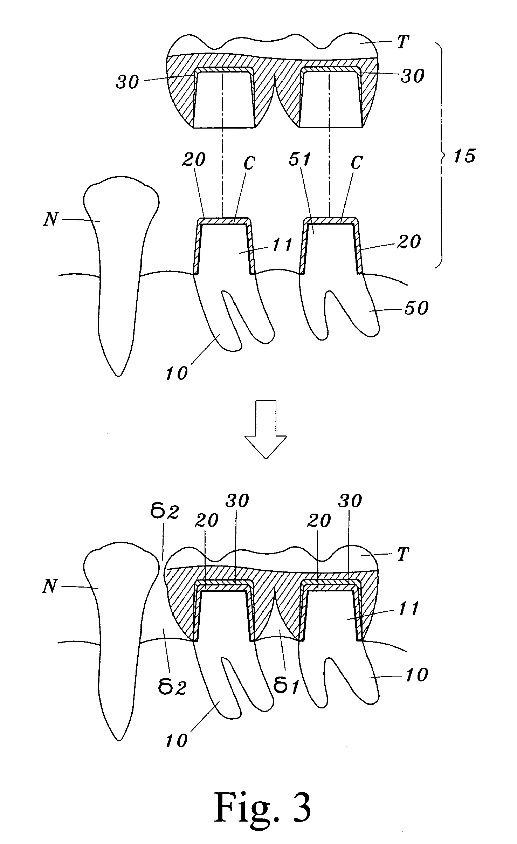

As illustrated in Fig. 3, a detachable dental prostheses 15 of this present invention with basic structure comprising an inner crown 20 and a dental prostheses T having an outer crown 30 installed inside.

The inner crown 20 is shaped to fit securely over a mended abutment 51 preformed on a decayed or diseased tooth 50 for curing the tooth 50, or to fit securely over a mended abutment 11 preformed on a natural tooth to be served as an abutment tooth 10 due to essential condition, and the fitting of the inner crown 20 over the mended abutment 51 or 11 is attained in conjunction with a cement C to constitute a permanently fixed combination.

The outer crown 30 of dental prostheses T is constituted a male-to-female matching structure relative to that of inner crown 20 so that the dental prostheses T is capable of being securely fitted on or freely detached from the inner crown 20 by combining or separating the male-to-female matching structure established on between the outer crown 30 and the inner crown 20.

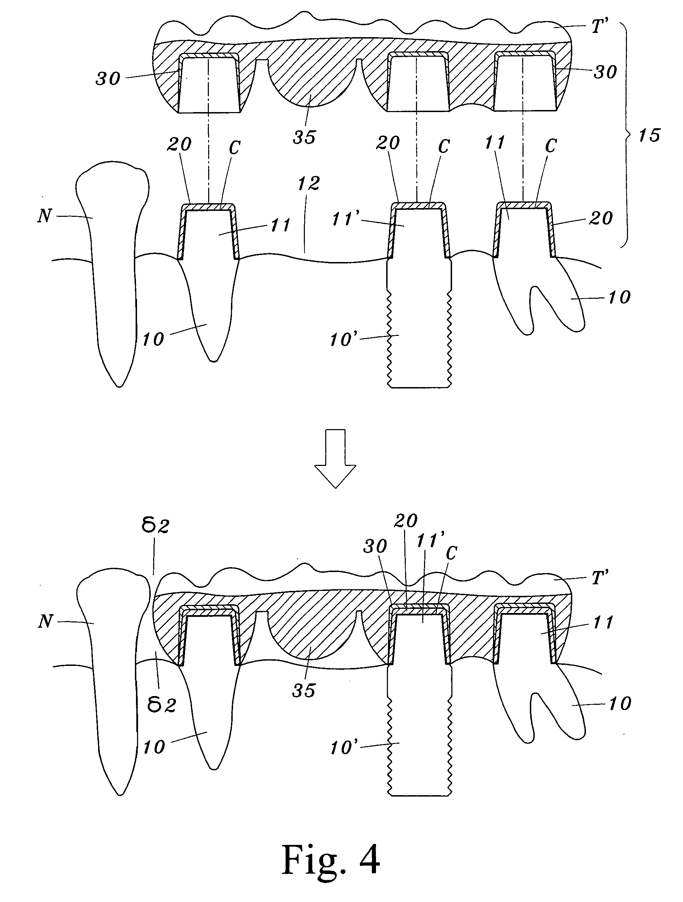

As illustrated in Fig. 4, a detachable dental prostheses 15 of this present invention may further have the dental prostheses T shown in Fig. 3 provided with several outer crowns 30 and a fill-up block 35 to become a kind of bridge-type dental prostheses T' particularly applied in some decayed or diseased teeth being completely extracted and under the condition of a dental implant 10' being implanted for cure and having an adjoining cavity 12 still leaved behind near to the dental implant 10'. An inner crown 20 shall be permanently fixed on a mended abutment 11' preformed on the dental implant 10' for easily mounting or detaching the bridge-type dental prostheses T' as shown in Fig. 4. By this way, the cavity 12 is therefore filled up with the fill-up block 35 of bridge-type dental prostheses T' too.

Accordingly, a detachable dental prostheses 15 of this present invention shall capably be applied in both natural tooth N (including natural abutment tooth 10) or dental implant 10'.

As shown in Fig. 3 and Fig. 4, due to the dental prostheses T or T' with outer crown 30 being detachable, in spite of having gaps δ2 formed between the dental prostheses T or T' and certain neighboring tooth (including healthy natural tooth N, abutment tooth 10 or dental implant 10'), the food particles deposited in the gaps δ2 can be easily removed under tooth care by detaching the dental prostheses T or T' with outer crown 30 from relative inner crown 20 fixed onto an abutment tooth 10 or a dental implant 10'. No healthy natural tooth will be pulled out in the future by preventing tooth gum or gingiva from bacterial contamination due to food particles thoroughly removed.

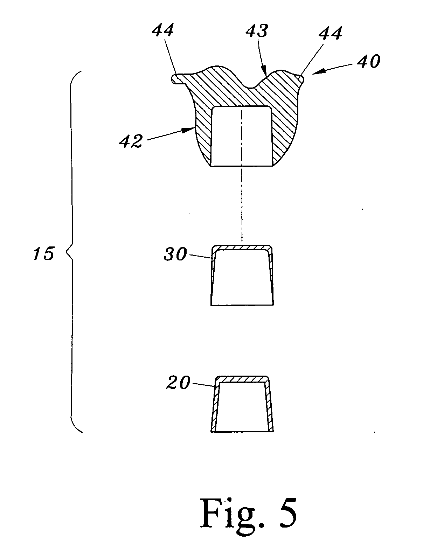

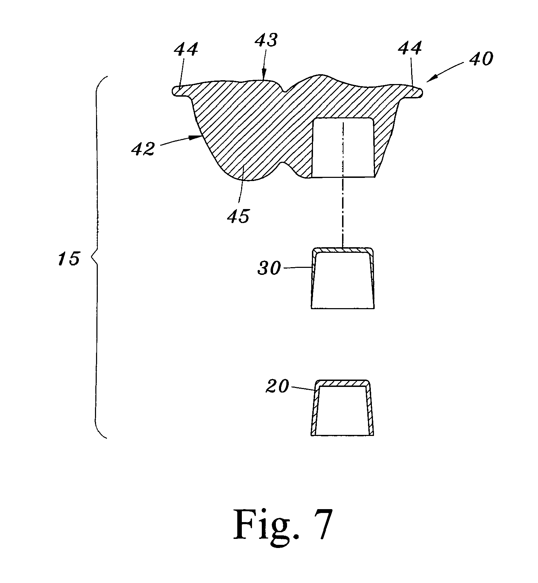

Further, for no gaps δ2 shall be formed between the dental prostheses T or T' and certain neighboring tooth, and in particular for no healthy natural teeth N shall be damaged to be served as an abutment tooth 10 when mounting a detachable dental prostheses 15 of the present invention, a preferred embodiment of detachable dental prostheses 15 of this present invention has shown in Fig. 5 or Fig. 7 which comprises an inner crown 20 and a dental prostheses 40 with outer crown 30 both same as the identical structure mentioned above but the dental prostheses 40 further having lap-joint section 44 horizontally extended from its top edge where is a boundary formed by outer surface 42 and top 43 of the dental prostheses 40.

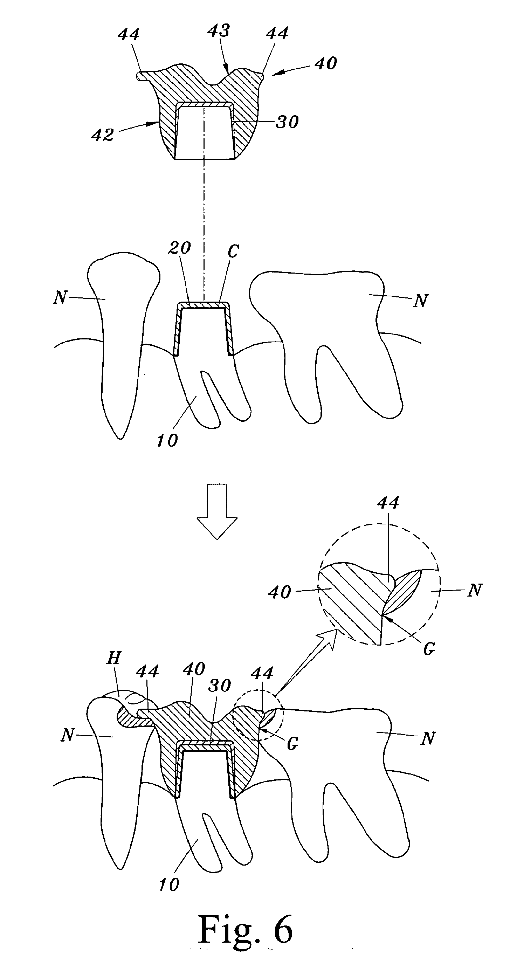

As shown in Fig. 6, Fig. 8 or Fig. 9, after the dental prostheses 40 with outer crown 30 and lap-joint section 44 of this present invention is securely fitted on the inner crown 20 of a mended abutment tooth 10 or a dental implant 10' by combining the male-to-female matching structure established on between the outer crown 30 and the inner crown 20, the lap-joint section 44 of dental prostheses 40 shall attach on occlusion surface H of neighboring tooth (including natural tooth N, abutment tooth 10 or dental implant 10') or further match an intimate contact line G with its profile of the neighboring tooth adjoining to the dental prostheses 40.

So that no gaps shall be formed between the top edge of dental prostheses 40 and the neighboring tooth adjoining to the dental prostheses 40 by way of the lap-joint section 44 of detachable dental prostheses 40 served as a means to eliminate a gap formed.

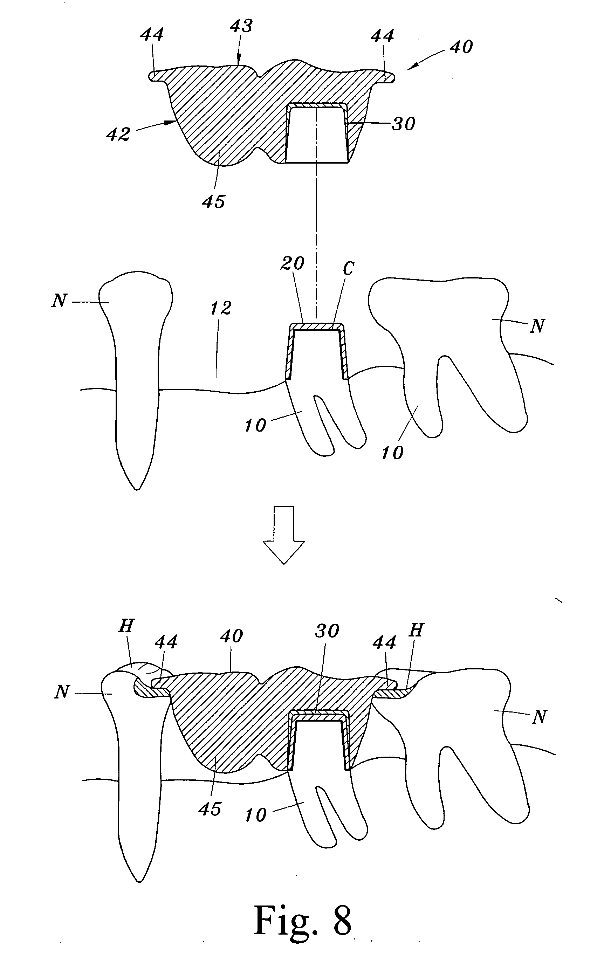

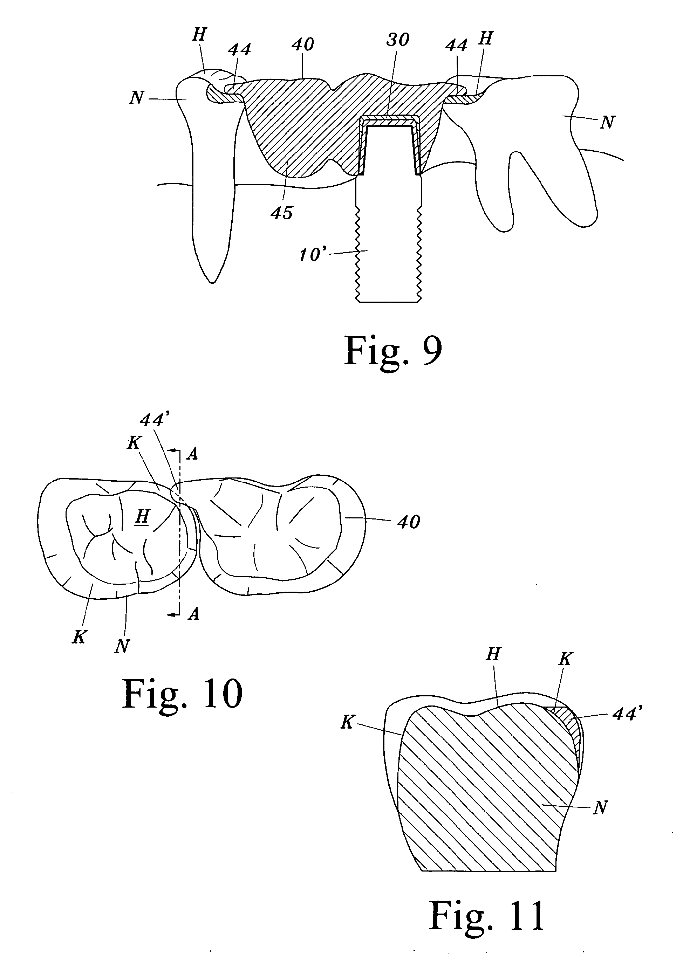

As shown in Fig. 8 and Fig. 9, the lap-joint section 44 of detachable dental prostheses 40 of the present invention shall particularly serve as a means to distribute the chewing pressure to neighboring natural teeth adjoining the detachable dental prostheses 40 by using the lap-joint section 44 of dental prostheses 40 attaching on occlusion surface H of neighboring tooth to alleviate the burden loaded on the detachable dental prostheses 40. As a result, the longevity of the detachable dental prostheses 40 of the present invention is then effectively prolonged.

In another words, without subjecting the neighboring healthy natural teeth N to being ground and mended as an abutment tooth 10 or without subjecting the neighboring abutment tooth 10 or dental implant 10' to being reformed, i.e. all healthy teeth N shall be undamaged and remained intact in spite of the mounting of the detachable dental prostheses 40 of the present invention.

It is readily apparent that the detachable dental prostheses 15 of this present invention may protect the abutment tooth 10 from working overload over a long period of time and prolong its service life due to properly taking a rest after the dental prostheses 40 being detached.

As illustrated in Fig. 8 and Fig. 9, a dental prostheses 40 of this present invention under essential condition may further have a fill-up block 45 to become a kind of bridge-type dental prostheses, and the fill-up block 45 is used to fill up a cavity 12 due to a diseased teeth being extracted.

As illustrated in Fig. 10 and Fig. 11, another embodiment of dental prostheses 40 of this present invention is that the dental prostheses 40 is provided with a lateral lap-joint section 44' laterally extended from its top edge.

Without subjecting any healthy tooth to being served as an abutment tooth, the lateral lap-joint section 44' of dental prostheses 40 of this present invention shall be attached onto a tooth wall K of a neighboring tooth after the dental prostheses 40 is securely fitted on the inner crown 20 of a mended abutment tooth 10 or a dental implant 10' by combining the male-to-female matching structure established on between the outer crown 30 and the inner crown 20.

Accordingly mentioned above, the detachable dental prostheses 15 of this present invention has the advantages over the prior used fixed dental prostheses including the service life span of the present invention is prolonged without subjecting any healthy tooth to grinding and mending as an abutment, and, by using the lap-joint section 44 of dental prostheses 40 attaching on occlusion surface H of neighboring tooth, the burden of chewing pressure loaded on the detachable dental prostheses 40 is obviously alleviated and no gap shall be formed between the detachable dental prostheses 40 and neighboring tooth including healthy natural tooth N, abutment tooth 10 or dental implant 10'.

## Claims

1. A detachable dental prostheses comprising an inner crown (20) used to permanently fix on an abutment tooth (10) or a dental implant (10'), and a dental prostheses (40) with an outer crown (30) constituted a male-to-female matching structure relative to that of inner crown (20) for securely fitted on or freely detached from the inner crown (20), **characterized in that** the dental prostheses (40) further having lap-joint section (44) horizontally extended from its top edge for being used to attach on occlusion surface of a neighboring tooth including natural tooth (N), abutment tooth (10) or dental implant (10') adjoining to the abutment tooth (10) or the dental implant (10').

2. The detachable dental prostheses of claim 1, **characterized in that** the dental prostheses (40) comprises a fill-up block (45).

3. The detachable dental prostheses of claim 1, **characterized in that** the lap-joint section (44) of the dental prostheses (40) match an intimate contact line (G) with profile of the neighboring tooth.

4. The detachable dental prostheses of claim 2, **characterized in that** the lap-joint section (44) of the dental prostheses (40) match an intimate contact line (G) with profile of the neighboring tooth.

5. The detachable dental prostheses of claim 1, **characterized in that** the lap-joint section (44) of the dental prostheses (40) is replaced by a lateral lap-joint section (44') laterally extended from its top edge for being used to attach onto a tooth wall (K) of the neighboring tooth.

6. The detachable dental prostheses of claim 5, **characterized in that** the dental prostheses (40) comprises a fill-up block (45).
